# EUROPEAN PATENT SPECIFICATION

(11) **EP 0 882 579 B1**
(45) Date of publication and mention of the grant of the patent: **24.11.2004**
(21) Application number: 98660051.8
(22) Date of filing: 26.05.1998
(51) Int. Cl.: B32B 29/06, B65D 65/40, C08J 7/04

(54) **Gastight packaging material**
Gasdichtes Verpackungsmaterial
Matériau d'emballage étanche aux gaz

(30) Priority: 02.06.1997 FI 972341
(43) Date of publication of application: 09.12.1998
(73) Proprietor: Metsä Tissue Oyj, 00210 Helsinki (FI)
(72) Inventor: Vähä-Nissi, Mika, 33720 Tampere (FI); Talja, Martti, 35800 Mänttä (FI)
(74) Representative: Kaukonen, Juha Veikko

(56) References cited:
- US-A- 3 663 240
- US-A- 5 270 119
- US-A- 5 340 620
- US-A- 5 552 002
- US-A- 5 562 980

## Description

### BACKGROUND OF THE INVENTION

The invention relates to a gastight, particularly oxygen-tight packaging material comprising a high-density paper as the base layer and an upper layer arranged thereon.

Foodstuffs packages have to protect the product from spoilage and humidity. The package also has to prevent the liquid, greases and aromas in the packaged foodstuff from exiting the package. For this reason the packaging material has to be highly impervious to gas, grease, aroma, water and water vapour for the foodstuff to remain usable in the package for a required time. The purpose of imperviousness to grease and aroma is mainly to prevent grease from being emitted from the packaged foodstuff to the surroundings and aromas affecting the taste from becoming weaker, i.e. evaporating from the packaged foodstuff. Imperviousness to aroma also serves to prevent external harmful aromas from entering the package. Furthermore, to prevent the packaged product from drying, the package has to be impervious to water vapour, and, on the other hand, to prevent the product from being spoiled, e.g. greases from going rancid, the package has to be gastight e.g. to prevent oxygen from penetrating the package and, consequently, the product. Similarly, if the packaged product is dry, various components have to be prevented from exiting and entering the package in a corresponding manner. In practice, package material of this kind cannot be made absolutely tight, and consequently the definitions gastight, greaseproof etc. refer to a material which allows said materials, such as a gas or gas mixture, grease etc., to be permeated in an amount not exceeding a maximum value for "tight material" defined by a generally known measuring principle in the art.

Known packaging materials usually employ different laminated materials comprising laminated layers of at least two different materials. Such laminated materials contain aluminium, plastic, paper etc., of which at least two materials are combined as a laminated layer. Accordingly, aluminium/paper laminates, plastic/paper laminates, aluminium/plastic laminates etc. are generally known. Such a material is known e.g. from WO 91/15410. These products naturally provide optimal imperviousness to gas, grease, aroma, water and water vapour, since the properties of aluminium and plastics in particular are good in relation thereto. However, in the manufacture of packages, ruptures often form in different folds and joints resulting in leaking seams and corners which allow material to exit and simultaneously oxygen to penetrate the package. Furthermore, the properties of some materials weaken as circumstances change, and consequently e.g. ethene vinyl alcohol is significantly less oxygen-tight with increasing relative humidity. A further weakness of known packages is that recycling laminated materials is practically impossible and separating the layers is both technically cumbersome and economically unprofitable.

Finnish Patent 92311 teaches a paperboard blank, i.e. a certain kind of packaging material comprising laminated paperboard coated by greaseproof paper, a polyolefin layer being used as a binder between the layers. Additionally, both sides of the material are laminated with a polyolefin, such as polyethene or the like. This laminated packaging material is cumbersome to manufacture and recycle because of the properties of the different laminate layers, although its properties are usable in other respects.

Finnish Patent Application 951637 teaches a packaging material with greaseproof paper coated with a layer of biodegradable plastic as the base layer. The properties of this solution are usable, but its manufacturing costs are relatively high. Rapid recycling of this material is also problematic.

It is an object of the present invention to achieve a packaging material which avoids the recycling problem of known packages and with which the required imperviousness to given factors, particularly gases, is achieved readily and simply. The packaging material of the invention is characterized in that the upper layer is a latex-type coating which is spread as a water-based dispersion on the high-density paper and then dried.

It is an essential idea of the invention that greaseproof high-density paper is coated with a water-based latex-type polymer dispersion which together with high-density paper forms an advantageous whole impervious to water, water vapour, grease, and gas in particular. It is an advantage of the invention that by using such latex-type water-based dispersions, a packaging material is achieved which has good properties in every respect and simultaneously the manufacturing costs can be kept low and the manufacture simple. It is a further advantage of the packaging material of the invention that it is readily recyclable and additionally latex-type materials degrade relatively rapidly in nature, whereby their handling does not cause any problems. A further advantage of the packaging material of the invention is that it can be readily repulped, composted and incinerated, whereby the package can be recycled or utilized in diverse ways after use. Furthermore, the packaging material of the invention is easy to manufacture technically by various devices, e.g. a press, various coating machines, and even by the coating or size press units of a paper machine, there being no need for separate dedicated devices. The packaging material of the invention has further been found to have special unforeseen characteristics that protect the packaged product. The packaging material of the invention has been found to be a good barrier against microbes, such as yeast, mould, bacteria, etc., whereby the spoilage caused by these in the product in the package can be prevented distinctly better than before.

The invention will be described in greater detail in the accompanying drawings, in which
Figure 1 shows schematically a cross-section of the packaging material of the invention,
Figure 2 shows schematically a second cross-section of the packaging material of the invention, and
Figure 3 shows schematically a third cross-section of the packaging material of the invention.

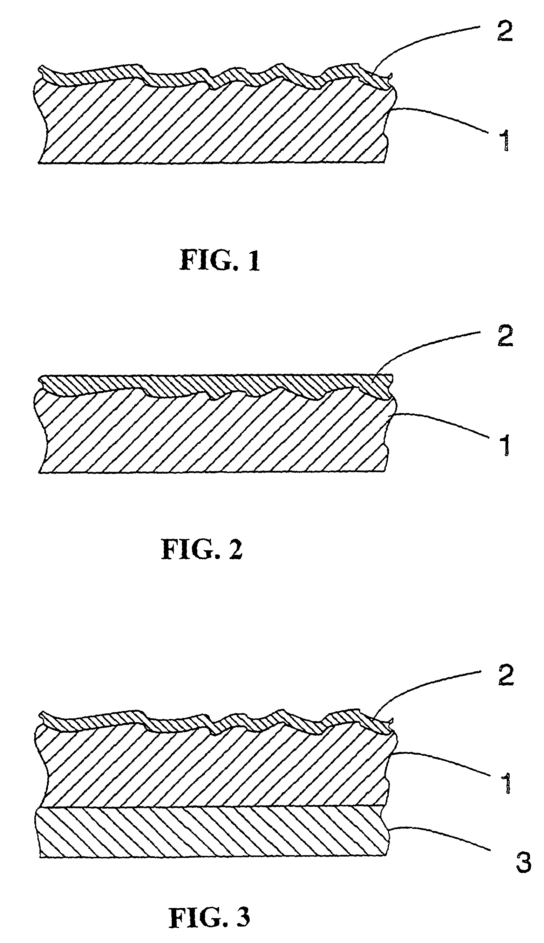

Figures 1 to 3 show a material layer of greaseproof high-density paper 1 constituting the base of the packaging material. Greaseproof high-density paper 1 is a paper material made of cellulose-based mass and generally used in foodstuffs packages. In the manufacture of high-density (that is, greaseproof) paper, cellulose is well refined, resulting in a compact structure. Thus it is highly greaseproof as such and furthermore prevents relatively well aromas from evaporating. Should the aim be to improve the properties of greaseproof paper over those of basic paper, it can be mechanically treated e.g. by calendering. Sulphuric acid treated cellulose-based paper can be similarly used as the basic material, i.e. high-density paper 1, its imperviousness properties being good as such. In both alternatives the raw material is sulphite or sulphate cellulose. The density of this basic material is typically between 50 and 600 s, expressed as the generally used Linden density, although higher values can be achieved. The grammage of such paper is typically between 30 and 100 g/m². The figure shows the high-density paper very schematically with its one surface shown even and the surface facing the coating shown pronouncedly rough to clarify the details of the coating. In practice the surface of such high-density paper is substantially equally rough on both sides.

The basic material is coated with a water-based latex-type polymer dispersion which is spread on the surface of the high-density paper 1, whereby they form a coating 2 on the high-density paper as the water evaporates. In such a dispersion the coating material is in the form of spherical particles in water, whereby the portion of coating material can vary. In addition to actual coating material the dispersion may comprise different fillers, the dry matter content of the dispersion varying typically within the range 25 to 75%, the remainder being mostly water. The dispersion may additionally comprise other different fillers, such as wax, pigments etc. in an amount of 0 to 80% of the dry matter content. The imperviousness properties of such a finished whole with respect to different gases, aromas, water vapour, water and grease are excellent. After the high-density paper 1 has been coated, the dispersion is dried in a suitable manner to evaporate water therefrom, whereby the remaining coating material particles combine to form the coating 2. In accordance with the invention, such coating materials include different latex-type synthetic polymers, such as styrene/butadiene, styrene acrylates, different acrylates, such as polyacrylates and polymethacrylates, and possible different biodegradable polymers, or mixtures of two or more of these materials. These materials can be used as such or completed with different fillers, waxes etc. It is essential that such coating dispersions do not contain polyvinyl chloride (PVC), polyvinylidene chloride (PVDC) or ethyl vinyl alcohol (EVOH) which are generally used known oxygen barriers. Hence, at its simplest, the invention can be implemented by using chemically or mechanically produced high-density paper coated with a suitable water-based latex-type coating material dispersion. The coating is dried resulting in a highly gastight packaging material.

Extremely good values for imperviousness to water vapour and gas can be achieved with the packaging material of the invention. Gas tightness as such is not an absolute tightness, but a material is defined as gastight when it allows the gas to be measured to be permeated in an amount not exceeding a preset limit value. In the experiments conducted, the oxygen permeability of the packaging material of the invention was at its lowest about 0.3 cm³/(1m² x d x bar) and easily less than 20 cm³/(1m² x d x bar), which is considered the normal limit value for oxygen permeability of an oxygen-tight material. Similarly, the water vapour permeability properties were at the lowest less than 2 g/(m² x d) and easily less than 10 g/(m² x d). Hence the imperviousness required for foodstuffs packages can be readily achieved with the packaging material of the invention using high-density paper and a water-based latex-typed dispersion coating without any other measures. Such gas tightness substantially prevents all types of gases outside the package, such as air and oxygen therein etc. from penetrating the package and simultaneously prevents nitrogen, carbon dioxide etc. fed into the package from exiting the package.

Figure 1 shows schematically a cross-section of the packaging material of the invention. In the figure the basic material, i.e. high-density paper 1, described above, is coated with a coating layer of substantially constant thickness.

Figure 2 in turn shows an embodiment of the packaging material of the invention, in which the high-density paper 1 is coated with the coating layer 2 in such a way that the coating surface of the packaging material is substantially even.

Figure 3 in turn shows a third embodiment of the packaging material of the invention, in which a third layer 3, fastened to the basic material, i.e. the high-density paper 1 in this embodiment, is combined with the embodiment of Figure 1. The third layer can be of another paper material or of some other suitable material that e.g. improves the external appearance of the packages. In the figure the third layer is shown very schematically as if both its sides were even, although in practice they are rough in a certain manner. Hence the layer 3 can be of either one or more materials and it can be made by using metallization, extrusion coating, lamination of paper, plastic or paperboard to the basic material etc. This way different usable packaging materials with suitable appearances and properties can be achieved. Although the third layer is fastened to the basic material in Figure 3, it may equally well be fastened to the coating, i.e. the layer 2, or, if desired, to both sides of the packaging material.

The coating 2 of the packaging material of the invention can also be made in different ways. Hence the coating may be spread by various manners known per se, such as metering, spraying etc. Similarly, the packaging material may be coated with coating material more than once, in which case the same coating material or, if desired, different coating materials can be used for the different coatings. Equally well the same or a different coating material can be spread on both sides of the packaging material to achieve the desired gas tightness value.

## Claims

1. A gastight, particularly oxygen-tight packaging material comprising a high-density paper (1) as the base layer and an upper layer arranged thereon, wherein the upper layer is a latex-type polymer coating (2) which is spread as a water-based dispersion on the high-density paper (1) and then dried, **characterized in that** the high-density paper (1) is made of mechanically treated cellulose-based mass, and that the packaging material has a maximum oxygen permeability of 20 cm³/(1m² x d x bar).

2. A packaging material as claimed in claim 1, **characterized in that** the latex-type polymer coating (2) is spread on the surface of the high-density paper (1) so as to form an even surface for the packaging material.

3. A packaging material as claimed in claim 1, **characterized in that** the latex-type polymer coating (2) is spread on the surface of the high-density paper (1) as a layer of constant thickness.

4. A packaging material as claimed in any one of claims 1 to 3, **characterized in that** the latex-type polymer coating (2) contains at least one of the following materials; styrene/butadiene, styrene/acrylates, acrylates, such as polyacrylates and polymethacrylates.

5. A packaging material as claimed in any one of the previous claims, **characterized in that** the grammage of the high-density paper is between 30 and 100 g/m².

## Patentansprüche

1. Gasdichtes, insbesondere sauerstoffdichtes Verpackungsmaterial umfassend ein Papier (1) hoher Dichte als die Grundschicht und eine darauf angeordnete obere Schicht, wobei die obere Schicht eine Latex-artige Polymerbeschichtung (2) ist, die als eine wasserbasierte Dispersion auf das Papier (1) hoher Dichte aufgetragen und dann getrocknet ist, **dadurch gekennzeichnet, dass** das Papier (1) hoher Dichte aus mechanisch behandelter Zellulose-basierter Masse hergestellt ist und dass das Verpackungsmaterial eine maximale Sauerstoffdurchlässigkeit von 20 cm³/(1m² x d x bar) hat.

2. Verpackungsmaterial wie in Anspruch 1 beansprucht, **dadurch gekennzeichnet, dass** die Latex-artige Polymerbeschichtung (2) so auf die Oberfläche des Papiers (1) hoher Dichte aufgetragen ist, dass sie eine ebene Oberfläche für das Verpackungsmaterial bildet.

3. Verpackungsmaterial wie in Anspruch 1 beansprucht, **dadurch gekennzeichnet, dass** die Latex-artige Polymerbeschichtung (2) als eine Schicht konstanter Dicke auf die Oberfläche des Papiers (1) hoher Dichte aufgetragen ist.

4. Verpackungsmaterial wie in einem der Ansprüche 1 bis 3 beansprucht, **dadurch gekennzeichnet, dass** die Latex-artige Polymerbeschichtung (2) mindestens eines der folgenden Materialien enthält; Styren/Butadien, Styren/Acrylate, Acrylate wie zum Beispiel Polyacrylate und Polymethacrylate.

5. Verpackungsmaterial wie in einem der vorhergehenden Ansprüche beansprucht, **dadurch gekennzeichnet, dass** das Flächengewicht des Papiers hoher Dichte zwischen 30 und 100 g/m² ist.

## Revendications

1. Matériau d'emballage étanche aux gaz et particulièrement étanche à l'oxygène, comprenant un papier à haute densité (1) à titre de couche de base et une couche supérieure agencée sur celle-ci, dans lesquelles la couche supérieure est un revêtement de polymère du type latex (2) qui est étalé sous forme d'une dispersion à base aqueuse sur le papier à haute densité (1) puis qui est séché, **caractérisé en ce que** le papier à haute densité (1) est produit d'une masse à base de cellulose traitée par voie mécanique, et **en ce que** le matériau d'emballage présente une perméabilité à l'oxygène maximum de 20 cm³/(1 m² x d x bar).

2. Matériau d'emballage selon la revendication 1, **caractérisé en ce que** le revêtement de polymère du type latex (2) est étalé sur la surface du papier à haute densité (1) de manière à former une surface régulière pour le matériau d'emballage.

3. Matériau d'emballage selon la revendication 1, **caractérisé en ce que** le revêtement de polymère du type latex (2) est étalé sur la surface du papier à haute densité (1) sous forme d'une couche d'épaisseur constante.

4. Matériau d'emballage selon l'une quelconque des revendications 1 à 3, **caractérisé en ce que** le revêtement de polymère du type latex (2) contient l'un au moins des matériaux suivants : styrène/butadiène, styrène/acrylates, acrylates, comme des polyacrylates et des polyméthacrylates.

5. Matériau d'emballage selon l'une quelconque des revendications précédentes, **caractérisé en ce que** le grammage du papier à haute densité est entre 30 et 100 g/m².
